# FASCICULE DE BREVET EUROPEEN

(11) **EP 2 651 828 B1**
(45) Date de publication et mention de la délivrance du brevet: **11.02.2015**
(21) Numéro de dépôt: 11799677.7
(22) Date de dépôt: 15.12.2011
(51) Int. Cl.: C01G 15/00, C01B 21/06, C01B 21/072

(54) **PROCÉDÉ DE PRÉPARATION D'UNE COMPOSITION DE PARTICULES MIXTES CONTENANT DES ÉLÉMENTS DES COLONNES 13 ET 15**
VERFAHREN ZUR HERSTELLUNG EINER ZUSAMMENSETZUNG AUS GEMISCHTEN PARTIKELN MIT ELEMENTEN AUS SPALTE 13 UND 15
PROCESS FOR PREPARING A COMPOSTION OF MIXED PARTICLES CONTAINING ELEMENTS FROM COLUMNS 13 AND 15

(30) Priorité: 17.12.2010 FR 1004927
(43) Date de publication de la demande: 23.10.2013
(73) Titulaire: Centre National de la Recherche Scientifique (CNRS), 75794 Paris Cedex 16 (FR)
(72) Inventeur: KAHN, Myrtil, F-31400 Toulouse (FR); GRAULE, Sébastien, F-33670 Creon (FR); SPATARO, Grégory, F-81000 Albi (FR)
(74) Mandataire: Cabinet BARRE LAFORGUE & associés
(86) Numéro de dépôt international: PCT/EP2011/072975
(87) Numéro de publication internationale: WO 2012/080425

(56) Documents cités:
- WO-A2-2009/136974
- US-A1- 2007 256 629
- Jennifer Chia-Jen Hsieh: "Synthesis, characterization and biotemplated assembyl of Indium nitride and indium gallium nitride", Thesis for the Degree of Doctor of Philosophy in Materials, Science and Engineering. Massachusetts Institute of Technology , 16 juillet 2010 (2010-07-16), pages 1-102, XP002638421, Extrait de l'Internet: URL:http://dspace.mit.edu/bitstream/handle /1721.1/59706/668423486.pdf?sequence=1 [extrait le 2011-05-23] cité dans la demande
- MICIC O I ET AL: "SYNTHESIS, STRUCTURE, AND OPTICAL PROPERTIES OF COLLOIDAL GAN QUANTUM DOTS", APPLIED PHYSICS LETTERS, AIP, vol. 75, no. 4, 26 juillet 1999 (1999-07-26), pages 478-480, XP000860658, AMERICAN INSTITUTE OF PHYSICS, MELVILLE, NY, US ISSN: 0003-6951, DOI: DOI:10.1063/1.124414 cité dans la demande
- BATTAGLIA D ET AL: "Formation of High Quality InP and InAs Nanocrystals in a Noncoordinating Solvent", NANO LETTERS, vol. 2, no. 9, 15 août 2002 (2002-08-15), pages 1027-1030, XP002496971, ACS, WASHINGTON, DC, US ISSN: 1530-6984, DOI: 10.1021/NL025687V [extrait le 2002-08-15]

## Description

L'invention concerne un procédé de préparation d'une composition de particules cristallines -notamment de nanoparticules monocristallines- dites mixtes, comprenant au moins un élément de la colonne 13 (groupe III) et au moins un élément de la colonne 15 (groupe V) du tableau de la classification périodique des éléments chimiques.

L'obtention de telles particules cristallines mixtes à des conditions économiques et compatibles avec une exploitation à l'échelle industrielle représente un enjeu majeur, compte tenu notamment de leurs diverses applications comme par exemple dans les récepteurs TV satellites, des fibres optiques pour les communications, les lecteurs de CD, les lecteurs de codes-barres, les écrans plats et LED, les cellules photovoltaïques...

Malgré d'intenses recherches en la matière, tous les procédés connus (cf. en particulier Jennifer Chia-Jen Hsieh « Synthesis, characterization and biotemplated assembly of Indium nitride and indium gallium nitride » Massachussetts Institute of Technology, 16 juillet 2010 ; Micic O I est al « synthesis, structure, and optical properties of colloidal GaN quantum dots » Applied Physics Letters, vol 74, no. 4, 26 juillet 1999 pp478-480 ; US2007/256629) nécessitent des traitements à haute température (toujours supérieure à 100°C).

Outre les procédés physiques à haute pression et haute température, il a été proposé une réaction de réduction en solution (cf. notamment WO2006/099386) à partir d'un sel précurseur d'un élément du groupe III (GaCl₃ dans l'exemple), d'un précurseur formé d'un composé mono, di ou trialkyle d'un élément du groupe V ((C₂H₅)₃N dans l'exemple), ou d'un précurseur formé d'un chélate d'un élément du groupe III avec un composé mono, di ou trialkyle d'un élément du groupe V, en présence d'un agent réducteur (KBH₄ dans l'exemple, ou d'un autre hydrure métallique) dans un solvant (acétonitrile ou triéthylamine dans l'exemple). Pour obtenir des nanoparticules cristallines une température au moins supérieure à 180°C (200°C dans l'exemple) est indispensable. La synthèse peut être conduite éventuellement en présence d'un agent encapsulant (TOPO dans l'exemple). En outre, des étapes subséquentes de purification et d'extraction des nanoparticules sont nécessaires, notamment pour éliminer les sous-produits tels que KCl.

Or les inventeurs ont maintenant constaté avec surprise qu'il est possible d'obtenir directement en une seule étape, non seulement des particules cristallines mixtes, mais même des nanoparticules monocristallines en suspension colloïdale, par simple mise en contact de précurseurs dans des conditions douces de température.

L'invention vise donc à pallier les inconvénients de l'état de la technique en proposant un procédé permettant d'obtenir en une seule étape une composition pure de particules cristallines mixtes des colonnes 13-15, notamment une suspension colloïdale de telles particules monocristallines. L'invention vise en particulier à proposer un procédé pouvant être conduit à basse température, notamment à température ambiante, et en l'absence de sels et d'agents réducteurs susceptibles de générer des sous-produits difficiles à éliminer.

Dans toute la suite, on adopte la terminologie suivante :
- nanoparticule : toute particule quelle que soit sa forme, présentant au moins une largeur et une épaisseur toutes deux inférieures à 100nm, typiquement comprises entre 1nm et 20nm ;
- milieu solvant non aqueux : toute composition apte à former une solution liquide lorsqu'elle est placée au contact d'au moins un composé tel qu'un complexe de coordination, cette composition étant non aqueuse en ce sens que l'eau ne fait pas office d'agent solvant dans cette composition, qui peut néanmoins comprendre des traces d'eau ; elle peut se présenter à l'état initialement liquide, ou au contraire ne passer à l'état liquide qu'après contact avec le(s) composé(s) à solubiliser ; elle peut être simple, c'est-à-dire formée d'un seul composé, ou au contraire complexe et renfermer plusieurs composés ; en particulier, elle peut renfermer non seulement un ou plusieurs composé(s) faisant office d'agent solvant, mais aussi tout autre composé non consommé par la réaction sensiblement neutre vis-à-vis de la dissolution du(des) complexe(s) de coordination(s), et jouant un rôle ou non dans la réaction ;
- complexe de coordination d'un élément : tout composé dont la structure consiste en au moins un atome dudit élément lié à au moins une molécule ou ion (anion) complexant, par une liaison covalente, dative, hydrogène ou électrostatique ;
- adduit : espèce chimique AB dont chaque entité moléculaire est formée par combinaison directe de deux entités moléculaires distinctes A et B ;
- hydrure : composé ayant au moins une liaison chimique entre un atome d'un élément du tableau périodique et un atome d'hydrogène.

L'invention concerne donc un procédé de préparation d'une composition de particules cristallines mixtes comprenant au moins un élément de la colonne 13 et au moins un élément de la colonne 15 du tableau de la classification périodique des éléments chimiques, dans lequel :
- on choisit au moins un précurseur comprenant au moins un élément E1 de la colonne 13,
- on choisit au moins un précurseur comprenant au moins un élément E2 de la colonne 15,
- on réalise une solution liquide par solubilisation dans un milieu solvant non aqueux d'au moins un premier précurseur choisi parmi les complexes de coordination comprenant au moins un élément E1 de la colonne 13, en présence d'au moins un composé, dit ligand, non réducteur vis à vis des précurseurs et choisi dans le groupe formé des composés comprenant les groupements azotés, carbonés, silylés, soufrés, phosphorés, oxygénés, borés, et choisi pour favoriser la formation de nanoparticules monocristallines mixtes,
- on met ladite solution liquide au contact d'au moins un deuxième précurseur choisi parmi les hydrures d'au moins un élément E2 de la colonne 15, et on soumet ladite solution liquide à des conditions réactionnelles propres à permettre la mise en contact des précurseurs et à entraîner une réaction de production de particules cristallines mixtes,
caractérisé en ce qu'on réalise la réaction à une température inférieure à 100° C.

Un procédé selon l'invention permet d'obtenir directement, en une étape, des particules cristallines mixtes, et peut être conduit dans des conditions douces de température, notamment à température ambiante, sans réaction de réduction (sans modification du degré d'oxydation des éléments E1 et E2 des précurseurs de départ) et en l'absence de tout agent ayant une fonction de réducteur pour la réaction de formation des nanoparticules effectuée. Ainsi avantageusement et selon l'invention on réalise la réaction de formation des nanoparticules en l'absence d'agent ayant une fonction d'agent réducteur pour la réaction de formation des nanoparticules.

Les inventeurs n'ont pas à ce jour d'explication claire à ce résultat surprenant. Il semblerait cependant que la décomposition exothermique en solution du complexe de coordination formant le premier précurseur soit de nature à favoriser la synthèse, cette dernière étant probablement une réaction de type acido basique, l'hydrure formant le deuxième précurseur faisant office d'acide, et n'ayant aucune fonction de réducteur dans la réaction (cet hydrure libérant probablement des protons H⁺).

Rien n'empêche, dans un procédé selon l'invention, d'effectuer la réaction avec un certain traitement thermique et en présence d'autres agents susceptibles de favoriser la solubilisation ou la réaction. Néanmoins, selon l'invention, on réalise la réaction à une température inférieure à 100° C et en l'absence d'agent réducteur. En particulier, on réalise ladite solution liquide dans un milieu solvant non aqueux en l'absence d'agent ayant une fonction d'agent réducteur pour la réaction de formation des nanoparticules. La solubilisation peut être obtenue par adjonction et mélange d'au moins un premier précurseur, et éventuellement d'au moins un ligand, dans un solvant non aqueux (ce dernier pouvant être lui-même formé par un ligand ou un mélange de ligands). Il est à noter qu'il est aussi possible de prévoir une étape préalable de synthèse in situ dans le milieu solvant d'au moins un premier précurseur et/ou d'au moins un deuxième précurseur et/ou d'au moins un ligand.

Les autres conditions réactionnelles permettant l'obtention de nanoparticules peuvent varier. En particulier, la réaction peut être conduite aussi bien à pression atmosphérique que sous pression, la valeur de la pression pouvant influencer la température. La concentration de chaque précurseur peut varier et ne détermine essentiellement que la quantité des nanoparticules obtenues dans le milieu solvant. La durée de la réaction dépend directement de la température, de la pression, qui influencent la cinétique. La quantité de chaque ligand influence la qualité cristalline des nanoparticules obtenues et leur état d'agglomération.

Avantageusement et selon l'invention, on réalise la réaction à une température inférieure ou égale à 50°C, notamment sous agitation. Dans un mode de réalisation préférentiel et selon l'invention, on réalise la réaction à pression et température ambiantes, sans traitement thermique.

Pour réaliser ladite solution liquide, on choisit chaque premier précurseur en fonction en particulier des particules que l'on souhaite obtenir. Ainsi, on peut utiliser un unique premier précurseur comprenant un unique élément E1 de la colonne 13, ou plusieurs premiers précurseurs comprenant chacun un même élément E1 de la colonne 13, ou un unique premier précurseur comprenant une pluralité d'éléments de la colonne 13, ou encore plusieurs premiers précurseurs comprenant chacun un élément E1 de la colonne 13, les différents éléments des différents précurseurs étant distincts.

Chaque premier précurseur est un complexe de coordination d'au moins un élément E1 de la colonne 13. En particulier, un complexe de coordination peut être formé d'un composé de type organométallique, un élément E1 de la colonne 13 faisant office de métal dans ce composé (bien qu'il ne constitue pas un métal au sens propre du terme).

Avantageusement et selon l'invention, on utilise au moins un premier précurseur -notamment chaque premier précurseur, de préférence un unique premier précurseur- choisi dans le groupe des complexes de coordination comprenant au moins un élément E1 de la colonne 13 et au moins une liaison E1-A1, où A1 est un élément choisi parmi le carbone, l'azote, l'oxygène, l'hydrogène, le phosphore, le silicium, le soufre et le sélénium.

Avantageusement et selon l'invention, on utilise au moins un premier précurseur -notamment chaque premier précurseur, de préférence un unique premier précurseur-choisi dans le groupe des composés complexes de coordination comprenant au moins un élément de la colonne 13 et au moins un groupement choisi parmi : les amidures ; les amidinates ; les groupements carbonés -notamment alkyles, aryles, cyclopentadiènyles, allyles, oléfines, polyoléfines, alcynes- ; les silyles ; les groupements oxygénés -notamment les carboxylates, les carbonates, les alcoolates- ; les hydrures ; les groupements phosphorés ; les groupements soufrés ; les groupements séléniés ; ainsi que les adduits amines, phosphines, oxygénés, soufrés et séléniés des complexes de coordination comprenant au moins un élément E1 de la colonne 13.

Lorsque E1 est le gallium, on peut avantageusement choisir un premier précurseur parmi les amidures de gallium tels que le tris(diméthylamino)gallium(III) : [Ga(N(CH₃)₂)₃]₂; les dérivés carbonés du gallium tels que les alkyles gallium tels que le triméthylgallium : [Ga(CH₃)₃] ; les silyles gallium tels que le tris(méthylbis-tertio-butyl)silyle gallium : [Ga(Si(CH₃)(^{t}(C₄H₉))₂)₃] ; les carboxylate de gallium tels que le stéarate de gallium : [Ga(OCOC₁₇H₃₅)₃] ; les alcoolates de gallium tels que l'isopropoxyde de gallium : [Ga(OCH(CH₃)₂)₃] ; les hydrures de gallium tels que l'hydrure du diméthyl gallium : [(CH₃)₂GaH] ; les phosphino gallium tels que le bis-(bis-(terbutylphosphino)triméthylphényl)gallium : [Ga((CH₃)₃(C₆H₂))(P^{t}(C₄H₉)₂)₂] ; les adduits phosphine de gallium tels que le triméthylgalliumtriméthylphosphine : [(CH₃)₃P•Ga(CH₃)₃].

Lorsque E1 est l'aluminium, on peut avantageusement choisir un premier précurseur parmi les amidures d'aluminium tels que le bis(µ-diméthylamino)tetrakis(diméthylaminodialuminium) [Al₂[µ-N(CH₃)₂]₂[N(CH₃)₂]₄] ; les dérivés carbonés de l'aluminium tels que les alkyles d'aluminium tels que le triméthylaluminium : [Al(CH₃)₃], triéthylaluminium : [Al(C₂H₅)₃] ; les silyles aluminium tels que le tris(triméthylsilyl)aluminium : [Al(Si(CH₃)₃)₃] ; les alcoolates d'aluminium tels que l'iso-propoxyde d'aluminium : [Al(OCH(CH₃)₂)₃] ; les carboxylates d'aluminium tels que le stéarate d'aluminium : [Al(OCOC₁₇H₃₅)₃] ; les hydrures d'aluminium tels que l'hydrure du diisobuthylaluminium : [(C₄H₉)₂AlH], l'hydrure de lithium aluminium : [LiAlH₄] ; les adduits phosphine d'aluminium tels que le triméthylaluminiumtriméthylphosphine : [(CH₃)₃P•Al(CH₃)₃] ; les adduits amine d'aluminium tels que le diméthylaminetriméthylaluminium : [(CH₃)₂NH•Al(CH₃)₃].

Lorsque E1 est l'indium, on peut avantageusement choisir un premier précurseur parmi les amidures d'indium tels que tris(triméthylsilylphényl)amino indium : [In(N(Si(CH₃)₃)(C₆H₅))₃], les dérivés carbonés de l'indium tels que les alkyles d'indium tels que le triméthylindium : [In(CH₃)₃], le triéthylindium : [In(C₂H₅)₃] ; les amino indium tels que diméthyl(méthylphénylamino)indium : [In(CH₃)₂(N(CH₃)(C₆H₅))] ; les amidinates d'indium tels que tris-(N,N'-dicyclohexylacétamidinato)indium : [In((C₆H₁₁)N-C(CH₃)-N(C₆H₁₁))₃] ; les alcoolates d'indium tels que l'isopropoxyde d'indium : [In(OCH(CH₃)₂)₃] ; les hydrures d'indium tels que l'hydrure(bis(diphényl)amidinate) d'indium : [((C₆H₅)₂N₂CH)₂InH] ; les adduits amine d'indium tels que le triméthylamine triméthylindium : [(CH₃)₃N•In(CH₃)₃].

Lorsque E1 est le bore, on peut avantageusement choisir un premier précurseur parmi les aminoboranes tels que le tris(diéthylamino)borane : [((C₂H₅)₂N)₃B], le diéthyl(éthylphénylamino)borane: [B(C₂H₅)₂N ((C₂H₅)(C₆H₅))]; les dérivés carbonés du bore tels que les boranes tels que le triéthylborane : [B(C₂H₅)₃] ; les amines de boranes tels que le triéthylamine-triéthylborane : [(C₂H₅)₃N•B(C₂H₅)₃] ; les borazoles tels que l'hexaéthylborazole : [((C₂H₅)NB(C₂H₅))₃] ; les borates tels que le triméthylborate : [(CH₃O)₃B] ; les borohydrures tels que le borohydrure : [BH₃], le diméthylborohydrure : [(CH₃)₂BH] ; les sulfures de bore tels que le borane diméthylsulfure : [BH₃•S(CH₃)₂] ; les sélénoxoboranes tel que le β-diketiminatosélénoxoborane : [(HC(C(CH₃))₂(N(2,6-(CH₃)₂C₆H₃))₂)BSe].

Lorsque E1 est le thallium, on peut avantageusement choisir un premier précurseur parmi les dérivés carbonés du thallium, notamment les trialkylthallium tels que triéthylthallium : [Tl(C₂H₅)₃] ; les carboxylates de thallium tels que le méthyldiacétate de thallium : [CH₃Tl(OCOCH₃)₂] ; les adduits phosphines de thallium tels que le triméthylphosphine-triméthylthallium :[(CH₃)₃Tl•P(CH₃)₃] ; les adduits sulfures de thallium tels que le diméthylsulfure de triméthylthallium : [(CH₃)₃Tl•S(CH₃)₂] ; les adduits amines de thallium tels que le triméthylamine triphénylthallium : [(C₆H₅)₃Tl•N(CH₃)₃] ; les adduits oxygénés de thallium tels que le tripentafluorophényloxy-bis(éthane) de thallium : [(C₆F₅)₃Tl•O(C₂H₅)₂] ; les adduits azotés de thallium tels que le triméthylamine-triphénylthallium : [(CH₃)₃N•Tl(C₆H₅)₃] ;

Lorsque plusieurs éléments E1 de la colonne 13 doivent être incorporés dans les particules, on peut avantageusement choisir soit plusieurs premier précurseurs, soit un premier précurseur parmi les complexes de coordination contenant plusieurs éléments E1, tels que par exemple le pentaméthylcyclopentadiènylaluminiumtriterbutylgallium : [(C₅(CH₃)₅H)Al→Ga(^{t}(C₄H₉))₃] ; le pentaméthylcyclopentadiènylindiumtriterbutylaluminium : [(C₅(CH₃)₅H)In→Al(^{t}(C₄H₉))₃].

En outre, dans un procédé selon l'invention, on réalise ladite solution liquide à partir d'un solvant choisi pour être compatible notamment avec chaque premier précurseur et avec chaque deuxième précurseur. Ainsi, avantageusement et selon l'invention, on utilise un milieu solvant comprenant un solvant organique choisi parmi le THF, le DMF, le DMSO, le diéthyléther, le méthylterbutyl éther, le diisopropyl éther, le toluène, l'anisole, l'acétone, le benzène, le trichloroéthylène, l'acétate d'éthyle, l'heptane, l'hexane, le pentane, le cyclohéxane, l'acétonitrile, le chloroforme, le dichlorométhane, le dioxane, le xylène.

Par ailleurs, on choisit aussi chaque deuxième précurseur en fonction en particulier des particules que l'on souhaite obtenir. Ainsi, on peut utiliser un unique deuxième précurseur comprenant un unique élément E2 de la colonne 15, ou plusieurs deuxièmes précurseurs comprenant chacun un même élément E2 de la colonne 15, ou un unique deuxième précurseur comprenant une pluralité d'éléments de la colonne 15, ou encore plusieurs deuxièmes précurseurs comprenant chacun un élément E2 de la colonne 15, les différents éléments des différents précurseurs étant distincts.

Quoi qu'il en soit, chaque deuxième précurseur est un hydrure, c'est-à-dire un composé comprenant au moins une liaison E2-H. Tout composé appartenant à la famille des hydrures d'au moins un élément E2 de la colonne 15 peut être utilisé à titre de deuxième précurseur. Ces hydrures peuvent comporter ou non d'autres atomes ou groupements. Il est à noter que dans ces hydrures l'élément E2 de la colonne 15 présente un degré d'oxydation négatif, qui reste inchangé au cours de la réaction (dans les particules obtenues). Ces hydrures ne peuvent donc pas faire office de réducteur dans la réaction. Ainsi, avantageusement et selon l'invention, on utilise au moins un deuxième précurseur choisi dans le groupe des hydrures comprenant au moins un élément E2 de la colonne 15, au moins une liaison E2-H, et au moins une liaison E2-A2, où A2 est un élément choisi parmi le carbone, l'azote, l'oxygène, l'hydrogène, le phosphore, et le silicium.

A titre de deuxième précurseur pouvant être utilisé dans un procédé selon l'invention, on peut aussi avantageusement utiliser un hydrure, pouvant être qualifié d'hydrure simple, composé exclusivement d'hydrogène et d'un élément E2 de la colonne 15. Ainsi, avantageusement et selon l'invention, on utilise au moins un deuxième précurseur choisi dans le groupe des hydrures simples de formule E2ₙHₘ, E2 étant un élément de la colonne 15, n et m étant des nombres entiers non nuls.

Lorsque E2 est l'arsenic, on peut avantageusement utiliser un deuxième précurseur choisi parmi l'arsine : AsH₃, et le phénylarsine : AsH₂(C₆H₅).

Lorsque E2 est l'antimoine, on peut avantageusement utiliser un deuxième précurseur choisi parmi la stibine : SbH₃, et la 1-H-stibepine : C₆H₆SbH.

Lorsque E2 est le bismuth, on peut avantageusement utiliser la bismuthine : BiH₃ à titre de deuxième précurseur.

Lorsque E2 est le phosphore, on peut avantageusement utiliser un deuxième précurseur choisi parmi les phosphines tels que la phosphine : PH₃,la méthylphosphine : CH₃PH₂, la tert-butylphosphine:^{t}(C₄H₉)PH₂ et tous leurs dérivés.

Lorsque E2 est l'azote, on peut avantageusement choisir un premier précurseur parmi l'ammoniac NH₃.

Ces hydrures sont souvent gazeux. Ainsi, avantageusement et selon l'invention, on utilise au moins un deuxième précurseur à l'état gazeux.

Pour mettre un tel deuxième précurseur à l'état gazeux au contact de ladite solution liquide, dans une première variante conforme à l'invention, on fait buller au moins un deuxième précurseur gazeux dans ladite solution liquide. En variante ou en combinaison, avantageusement et selon l'invention, on met ladite solution liquide sous une atmosphère gazeuse contenant au moins un deuxième précurseur gazeux. Selon une autre variante conforme à l'invention, on génère au moins un deuxième précurseur in situ dans ladite solution liquide en ajoutant à cette dernière des précurseurs de ce(s) deuxième(s) précurseur(s). Il est à noter qu'au moins un desdits précurseurs peu(ven)t éventuellement être réducteur(s), mais n'intervien(nen)t pas directement en tant que réducteur(s) dans la réaction de formation des nanoparticules.

L'invention permet en particulier d'obtenir des nanoparticules monocristallines mixtes. Pour ce faire, avantageusement et selon l'invention, on ajoute à ladite solution liquide au moins un composé, dit ligand, non réducteur vis à vis des précurseurs choisi dans le groupe formé des composés comprenant les groupements azotés, carbonés, silylés, soufrés, phosphorés, oxygénés, borés et choisi pour favoriser la formation de nanoparticules monocristallines mixtes. Avantageusement et selon l'invention, un tel ligand est choisi pour stabiliser lesdites nanoparticules monocristallines mixtes.

A titre d'exemples, avantageusement et selon l'invention, on utilise au moins un ligand choisi dans le groupe formé des amines, des oxydes d'azotes, des aminoalcools, des nitriles (en particulier cyano), des amino-acides, des imines (bases de Schiff), des composés diazo, des carbamates, des ammoniums, des cyanates, des isocyanates, des siloxanes, des silanes, des silazanes, des urées, des carbonyles, des hydroxyles, des époxydes, des cyclodextrines, glycosides, des thiols, des aminothiols, des thiocyanates, des diisothiocyanates, des xanthates (ROC(S)SR'), des thiourées, des sulfites, des thionyles, des thiosulfates, des sulfates, des phosphines, des oxydes de phosphine, des sulfures de phosphines, des phosphonates, des acides phosphoniques, des phosphinates, des acides phosphiniques, des phosphates, des carboxylates, des acides carboxyliques, des carbènes, des alcynes, des alcènes, des arènes, et des acides de Lewis tels que les boranes et les aminoboranes.

Plus particulièrement, avantageusement et selon l'invention, on utilise au moins un ligand choisi dans le groupe comprenant l'hexadécylamine, la dodécylamine, l'octylamine, l'oléylamine, l'éthylènediamine, la pyridine, l'octanethiol, le dodécanethiol, l'hexadécanethiol, la trioctylphosphine, l'oxyde de trioctylphosphine, l'acide octanoïque, l'acide myristique, l'acide stéarique, l'acide oléique, l'acide laurique, l'acide hexylphosphonique, l'acide tetradécylphosphonique, le poly(éthylèneglycol) bis(3-propylamine) de formule H₂NC₃H₆[-OCH₂CH₂]ₙ-OC₃H₆NH₂ et ayant une masse molaire de l'ordre de 1500 g.mol⁻¹, le poly(éthylèneglycol) bis(2-éthylamine) de formule H₂NC₂H₄[-OCH₂CH₂]ₙ-OC₂H₄NH₂ et ayant une masse molaire de l'ordre de 3000 g.mol⁻¹ à 10 000 g.mol⁻¹, le α-(2-éthylamine)-méthoxy(éthylèneglycol) de formule H₃C[-OCH₂CH₂]ₙ-OC₂H₄NH₂ et ayant une masse molaire de l'ordre de 750 g.mol⁻¹, le poly(éthylèneglycol)dioïque de formule HOOC-CH₂[-OCH₂CH₂]ₙ-O-CH₂-COOH et ayant une masse molaire de l'ordre de 600 g.mol⁻¹, le méthyléther-poly(éthylèneglycol)oïque de formule H₃C[-OCH₂CH₂]ₙ-O-CH₂-COOH et ayant une masse molaire de l'ordre de 3000 g.mol⁻¹.

Avantageusement et selon l'invention, on alimente un réacteur (contenant ladite solution liquide contenant chaque premier précurseur) avec chaque deuxième précurseur pendant une durée n'excédant pas 10h, notamment de l'ordre de 1h. Ce faisant, chaque deuxième précurseur se dissout au moins partiellement dans la solution liquide. Puis, on laisse réagir le milieu réactionnel pendant une durée comprise entre 1h et 30 jours, notamment de l'ordre de 8 jours de façon à obtenir des particules mixtes -notamment des nanoparticules en solution colloïdale.

Les particules sont obtenues directement en suspension dans le solvant, notamment en suspension colloïdale, et il suffit d'évaporer la phase liquide, qui est entièrement volatile, pour obtenir une composition solide directement utilisable. Il est à noter à ce titre que les résidus du premier précurseur et les ligands peuvent être des composés volatils. En tout état de cause, il est possible de choisir chaque premier précurseur de telle sorte qu'il soit volatil. On peut également choisir chaque ligand de façon à ce qu'il soit aussi volatil, si sa présence est nuisible à l'application envisagée de la composition obtenue selon l'invention. Dans ce dernier cas cependant, la stabilité de la solution colloidale contenant les particules risque d'en être affectée.

En outre, les composés autres que les particules mixtes présents dans le milieu réactionnel en fin de réaction et donc dans la composition obtenue (suspension colloïdale), sont le plus souvent non réactifs et neutres vis-à-vis des différentes applications envisagées d'une composition obtenue par un procédé selon l'invention. En particulier, ils ne sont pas halogénés. Ils ont également pour effet de stabiliser les particules en suspension colloïdale. En conséquence, la composition liquide obtenue (suspension colloïdale) peut être également directement utilisée dans la plupart des applications.

L'invention concerne également un procédé caractérisé en combinaison par tout ou partie des caractéristiques mentionnées ci-dessus ou ci-après.

D'autres buts, caractéristiques et avantages de l'invention apparaîtront à la lecture des exemples suivants et des figures annexées qui en illustrent les résultats et dans lesquelles :
- les figures 1, 4, 6, 9, 11, 13 et 15 sont des spectres d'absorption de compositions obtenues par un procédé selon les différents exemples conformes à l'invention,
- les figures 2, 5, 7, 10, 12, 14 sont des spectres d'émission de compositions obtenues dans les exemples,
- les figures 3, 8, 16 sont des vues au microscope électronique de compositions obtenues dans les exemples.

### Protocole :

Dans un réacteur chimique, un premier précurseur source d'un élément de la colonne 13 (groupe III) est dissout dans un solvant organique sous atmosphère inerte à température ambiante. A cette solution liquide est introduit un ligand. Le deuxième précurseur sous forme de gaz, source de l'élément de la colonne 15 (groupe V), est introduit dans le réacteur chimique :
- soit en le faisant buller dans la solution liquide formée dans le solvant organique et contenant le premier précurseur et le ligand, sous atmosphère inerte et à température ambiante ou avec un léger chauffage à une température inférieure ou égale à 50°C,
- soit en plaçant ladite solution liquide sous atmosphère gazeuse du deuxième précurseur à température ambiante ou avec un léger chauffage à une température inférieure ou égale à 50°C,
- soit en le faisant buller dans la solution liquide formée dans le solvant organique et contenant le premier précurseur et le ligand, sous atmosphère inerte et à température ambiante, puis après arrêt du bullage, en chauffant ladite solution à une température inférieure ou égale à 50°C,
- soit en plaçant ladite solution liquide sous atmosphère gazeuse du deuxième précurseur à température ambiante pendant une première durée, puis en chauffant ladite solution à une température inférieure ou égale à 50°C pendant une deuxième durée subséquente.

### Exemple 1 : préparation de nanoparticules de GaAs :

Le tableau 1 ci-après résume les réactifs utilisés et leurs quantités dans cet exemple.

**Tableau 1**

| | Premier précurseur | Ligand | Deuxième précurseur |
|---|---|---|---|
| Formule | [Ga(N(CH₃)₂)₃]₂ | Octylamine | AsH₃ |
| n | 0,3mmol | 1,2mmol | Bullage |
| Masse molaire | 403,9 | 129,25 | |
| Masse totale | 120mg | 150mg | |

Il est à noter que dans le premier précurseur Ga présente un degré d'oxydation égal à +3, et que dans le deuxième précurseur As présente un degré d'oxydation égal à -3, et que ces degrés d'oxydation restent les mêmes dans les particules obtenues. Le solvant est le THF. La réaction est conduite à température ambiante. Le deuxième précurseur est introduit par bullage dans la solution liquide.

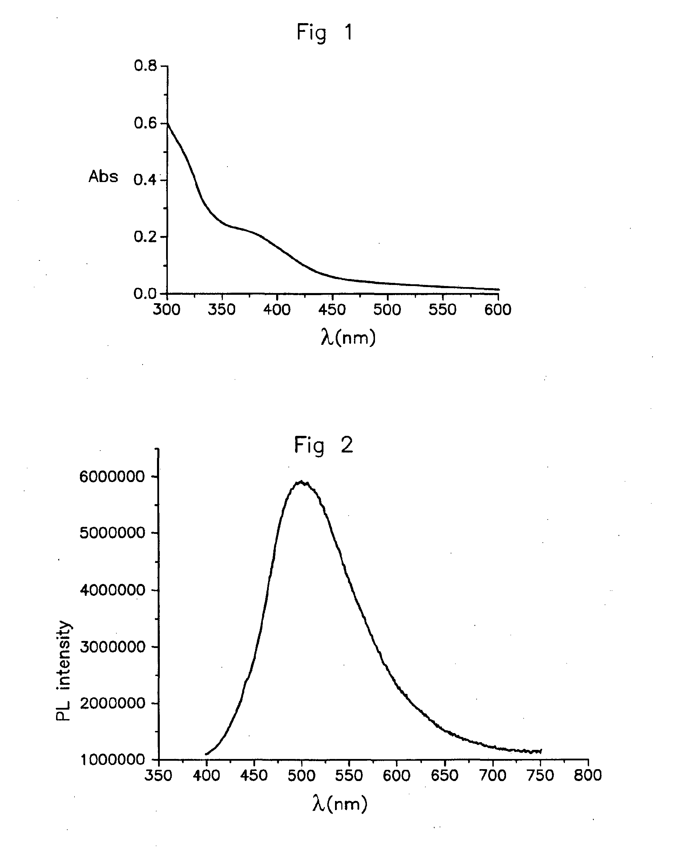

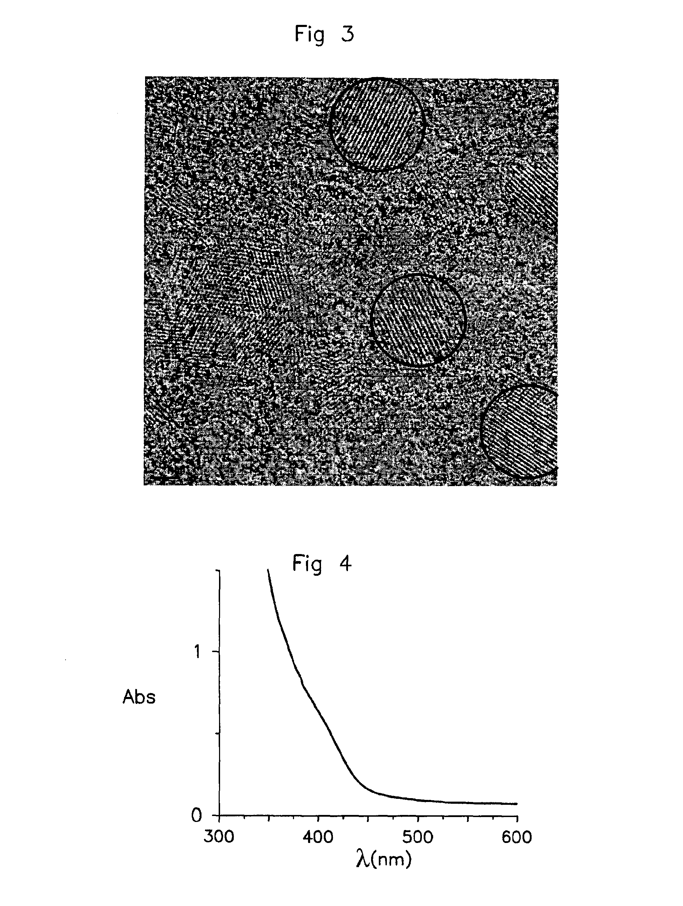

La figure 1 donne le spectre d'absorption de la suspension colloïdale obtenue ; la figure 2 en donne le spectre d'émission (longueur d'onde d'excitation 390 nm) ; la figure 3 est une vue microscopique en transmission (TEM) montrant, comme les spectres, la présence de nanoparticules monocristallines de GaAs.

### Exemple 2 : préparation de nanoparticules de GaAs :

Le tableau 2 ci-après résume les réactifs utilisés et leurs quantités dans cet exemple.

**Tableau 2**

| | Premier précurseur | Ligand | Deuxième précurseur |
|---|---|---|---|
| Formule | [Ga(N(CH₃)₂)₃]₂ | Hexadécylamine | AsH₃ |
| n | 0,3mmol | 1,2mmol | Bullage |
| Masse molaire | 403,9 | 241,46 | |
| Masse totale | 120mg | 289mg | |

Le solvant est le THF. La réaction est conduite à température ambiante. Le deuxième précurseur est introduit par bullage dans la solution liquide.

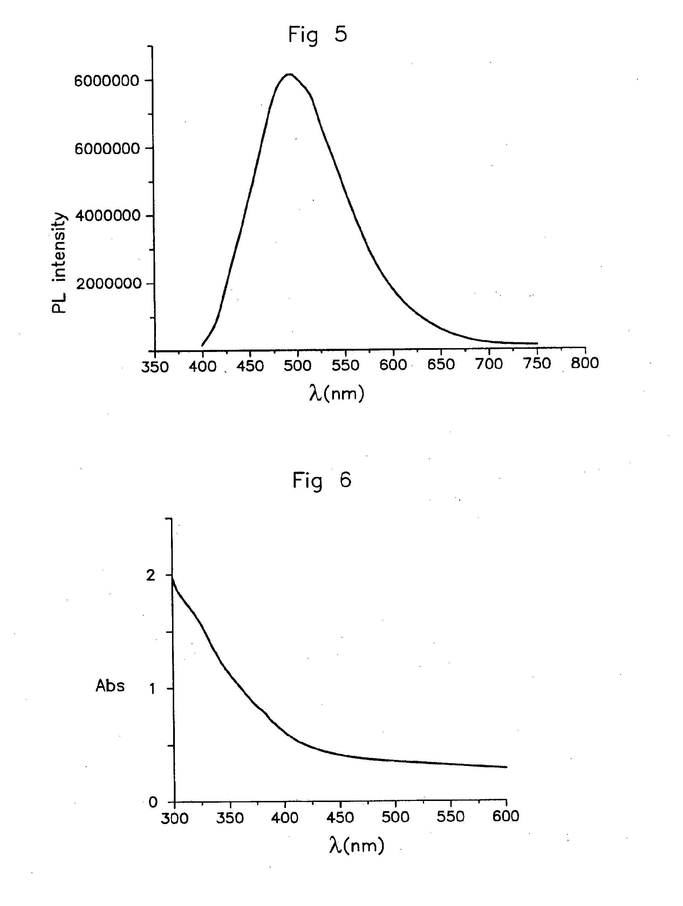

La figure 4 donne le spectre d'absorption de la suspension colloïdale obtenue ; la figure 5 en donne le spectre d'émission (longueur d'onde d'excitation 390 nm) ; ces spectres démontrent la présence de nanoparticules monocristallines de GaAs.

### Exemple 3 : préparation de nanoparticules de GaP :

Le tableau 3 ci-après résume les réactifs utilisés et leurs quantités dans cet exemple.

**Tableau 3**

| | Premier précurseur | Ligand | Deuxième précurseur |
|---|---|---|---|
| Formule | [Ga(N(CH₃)₂)₃]₂ | Hexadécylamine | PH₃ |
| n | 0,3mmol | 1,2mmol | Bullage |
| Masse molaire | 403,9 | 241,46 | |
| Masse totale | 120mg | 289mg | |

Le solvant est le THF. La réaction est conduite à température ambiante. Le deuxième précurseur est introduit par bullage dans la solution liquide.

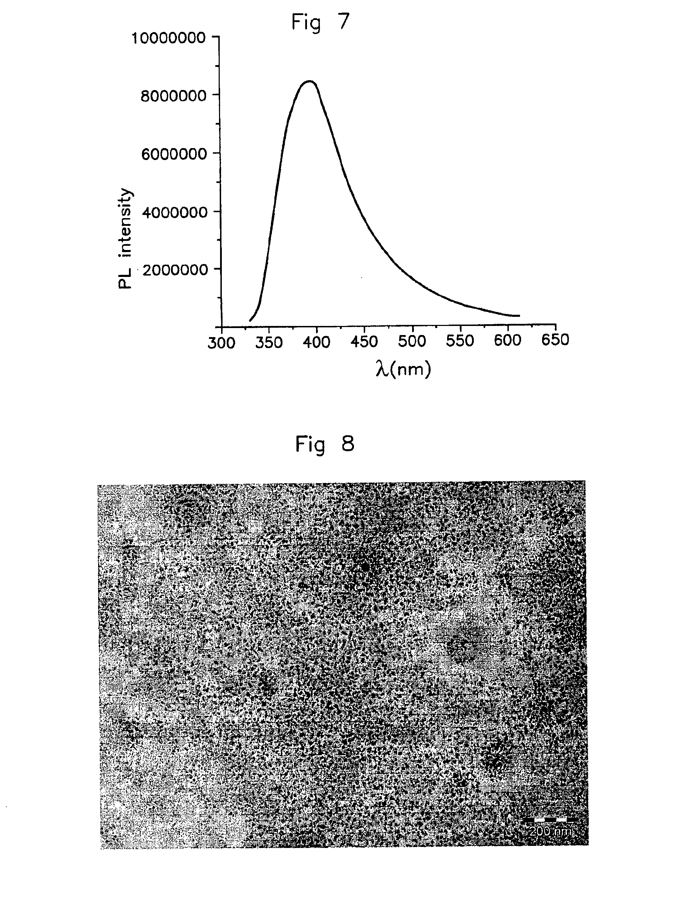

La figure 6 donne le spectre d'absorption de la suspension colloïdale obtenue ; la figure 7 en donne le spectre d'émission (longueur d'onde d'excitation 320 nm) ; la figure 8 est une vue microscopique en transmission à haute résolution (HR-TEM) montrant, comme les spectres, la présence de nanoparticules de GaP.

### Exemple 4 : préparation de nanoparticules de InAs :

Le tableau 4 ci-après résume les réactifs utilisés et leurs quantités dans cet exemple.

**Tableau 4**

| | Premier précurseur | Ligand | Deuxième précurseur |
|---|---|---|---|
| Formule | In(CH₃)₃ | Hexadécylamine | AsH₃ |
| n | 1,12 mmol | 1,12mmol | Sous atmosphère |
| Masse molaire | 159,92 | 241,46 | |
| Masse totale | 180mg | 270mg | |

Le solvant est l'éther. La réaction est conduite à température ambiante. La solution liquide est mise en contact avec le deuxième précurseur sous atmosphère gazeuse de ce dernier en très légère surpression.

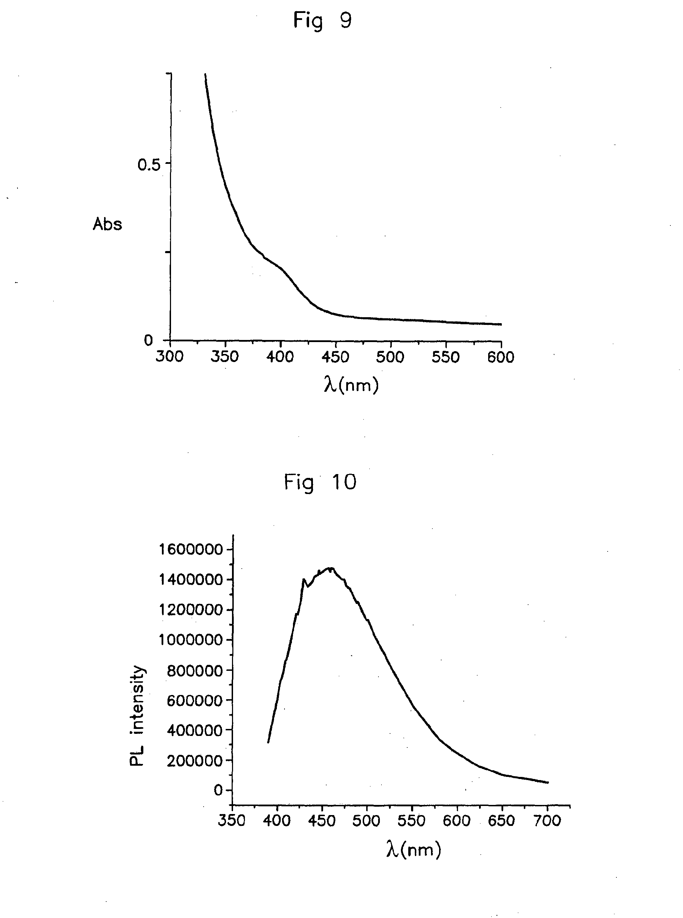

La figure 9 donne le spectre d'absorption de la suspension colloïdale obtenue ; la figure 10 en donne le spectre d'émission (longueur d'onde d'excitation 380 nm) ; ces spectres démontrent la présence de nanoparticules de InAs.

### Exemple 5 : préparation de nanoparticules de InAs :

Le tableau 5 ci-après résume les réactifs utilisés et leurs quantités dans cet exemple.

**Tableau 5**

| | Premier précurseur | Ligand | Deuxième précurseur |
|---|---|---|---|
| Formule | In(CH₃)₃ | Hexadécylamine | AsH₃ |
| n | 1,12 mmol | 1,12mmol | Bullage |
| Masse molaire | 159,92 | 241,46 | |
| Masse totale | 180mg | 270mg | |

Le solvant est le THF. La réaction est conduite à température ambiante. Le deuxième précurseur est introduit par bullage dans la solution liquide.

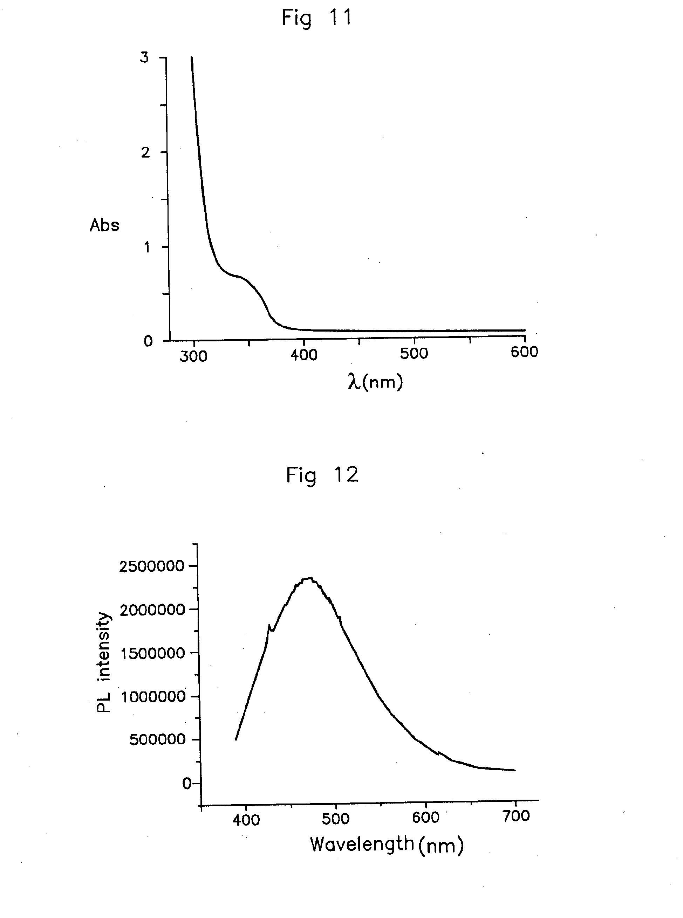

La figure 11 donne le spectre d'absorption de la suspension colloïdale obtenue ; la figure 12 en donne le spectre d'émission (longueur d'onde d'excitation 380 nm) ; ces spectres démontrent la présence de nanoparticules de InAs.

### Exemple 6 : préparation de nanoparticules de GaN :

Le tableau 6 ci-après résume les réactifs utilisés et leurs quantités dans cet exemple.

**Tableau 6**

| | Premier précurseur | Ligand | Deuxième précurseur |
|---|---|---|---|
| *Formule* | [Ga(N(CH₃)₂)₃]₂ | Hexadécylamine | NH₃ |
| *n* | 0,3mmol | 1,2mmol | Bullage |
| *Masse molaire* | 403,9 | 241,46 | |
| *Masse totale* | 120mg | 289mg | |

Le solvant est le toluène. La réaction est conduite à température ambiante. Le deuxième précurseur est introduit par bullage dans la solution liquide.

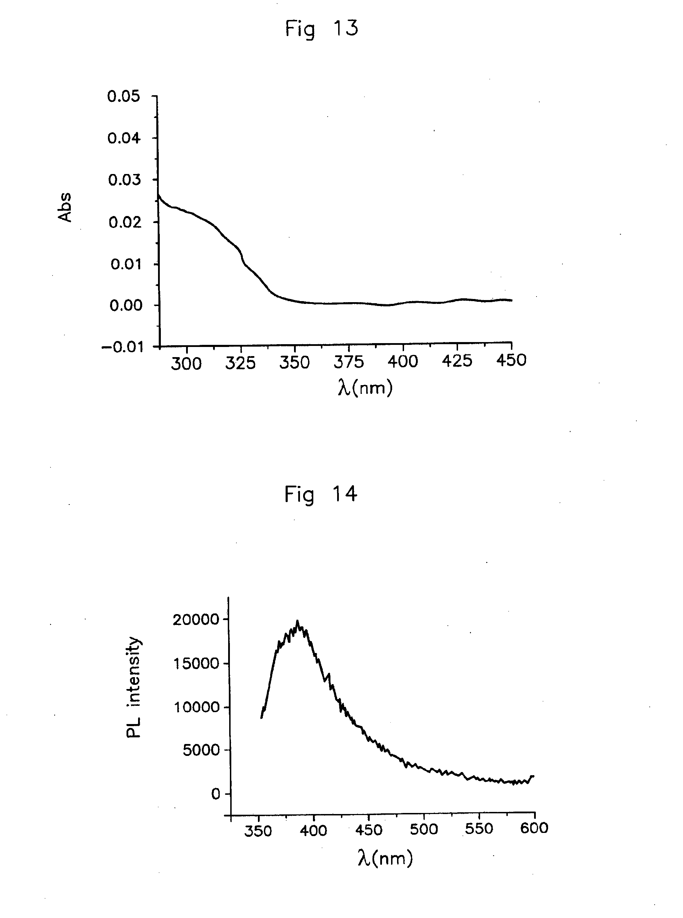

La figure 13 donne le spectre d'absorption de la suspension colloïdale obtenue ; la figure 14 en donne le spectre d'émission (longueur d'onde d'excitation 310 nm) ; ces spectres démontrent la présence de nanoparticules de GaN.

### Exemple 7 : préparation de nanoparticules de GaN:

Le tableau 7 ci-après résume les réactifs utilisés et leurs quantités dans cet exemple.

**Tableau 7**

| | Premier précurseur | Ligand | Deuxième précurseur |
|---|---|---|---|
| Formule | [Ga(N(CH₃)₂)₃]₂ | Hexadécylamine | NH₃ |
| n | 0,3mmol | 1,2mmol | Bullage |
| Masse molaire | 403,9 | 241,46 | |
| Masse totale | 120mg | 289mg | |

Le solvant est le THF. La réaction est conduite par bullage du deuxième précurseur à température ambiante pendant 1 heure, puis, après une nuit au repos, chauffage à 50°C sans bullage pendant trois jours.

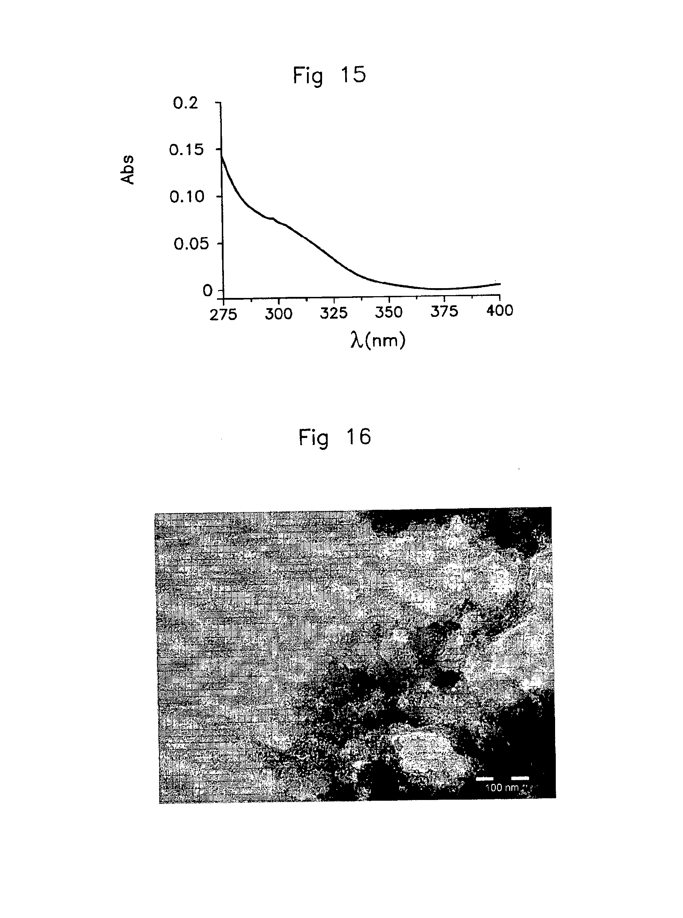

La figure 15 donne le spectre d'absorption de la suspension colloïdale obtenue ; la figure 16 est une vue microscopique en transmission (TEM) montrant, comme le spectre, la présence de nanoparticules monocristallines de GaN.

## Revendications

1. Procédé de préparation d'une composition de particules cristallines mixtes comprenant au moins un élément de la colonne 13 et au moins un élément de la colonne 15 du tableau de la classification périodique des éléments chimiques, dans lequel :
- on choisit au moins un précurseur comprenant au moins un élément E1 de la colonne 13,
- on choisit au moins un précurseur comprenant au moins un élément E2 de la colonne 15,
- on réalise une solution liquide par solubilisation dans un milieu solvant non aqueux d'au moins un premier précurseur choisi parmi les complexes de coordination comprenant au moins un élément E1 de la colonne 13, en présence d'au moins un composé, dit ligand, non réducteur vis à vis des précurseurs et choisi dans le groupe formé des composés comprenant les groupements azotés, carbonés, silylés, soufrés, phosphorés, oxygénés, bor et choisi pour favoriser la formation de nanoparticules monocristallines mixtes,
- on met ladite solution liquide au contact d'au moins un deuxième précurseur choisi parmi les hydrures d'au moins un élément E2 de la colonne 15, et on soumet ladite solution liquide à des conditions réactionnelles propres à permettre la mise en contact des précurseurs et à entraîner une réaction de production de particules cristallines mixtes,
**caractérisé en ce qu'**on réalise la réaction à une température inférieure à 100° C.

2. Procédé selon la revendication 1, **caractérisé en ce qu'**on réalise la réaction de formation des nanoparticules en l'absence d'agent ayant une fonction d'agent réducteur pour la réaction de formation des nanoparticules.

3. Procédé selon l'une des revendications 1 ou 2, **caractérisé en ce qu'**on réalise la réaction à une température inférieure ou égale à 50°C.

4. Procédé selon l'une des revendications 1 à 3, **caractérisé en ce qu'**on réalise la réaction à pression et température ambiantes, sans traitement thermique.

5. Procédé selon l'une des revendications 1 à 4, **caractérisé en ce qu'**on utilise au moins un premier précurseur choisi dans le groupe des complexes de coordination comprenant au moins un élément E1 de la colonne 13 et au moins une liaison E1-A1, où A1 est un élément choisi parmi le carbone, l'azote, l'oxygène, l'hydrogène, le phosphore, le silicium, le soufre et le sélénium.

6. Procédé selon la revendication 5, **caractérisé en ce qu'**on utilise au moins un premier précurseur choisi dans le groupe des complexes de coordination comprenant au moins un élément E1 de la colonne 13, et au moins un groupement choisi dans le groupe comprenant les amidures ; les amidinates, les groupements carbonés ; les silyles ; les groupements oxygénés ; les hydrures ; les groupements phosphorés ; les groupements soufrés ; les groupements séléniés ; ainsi que les adduits amine, phosphines, oxygénés, soufrés et séléniés des complexes de coordination comprenant au moins un élément E1 de la colonne 13.

7. Procédé selon l'une des revendications 1 à 6, **caractérisé en ce qu'**on utilise au moins un deuxième précurseur à l'état gazeux.

8. Procédé selon la revendication 7, **caractérisé en ce que** l'on fait buller au moins un deuxième précurseur gazeux dans ladite solution liquide.

9. Procédé selon l'une des revendications 7 ou 8, **caractérisé en ce qu'**on met ladite solution liquide sous une atmosphère gazeuse contenant au moins un deuxième précurseur gazeux.

10. Procédé selon l'une des revendications 1 à 9, **caractérisé en ce qu'**on utilise au moins un deuxième précurseur choisi dans le groupe des hydrures comprenant au moins un élément E2 de la colonne 15, au moins une liaison E2-H, et au moins une liaison E2-A2, où A2 est un élément choisi parmi le carbone, l'azote, l'oxygène, l'hydrogène, le phosphore, et le silicium.

11. Procédé selon l'une des revendications 1 à 10, **caractérisé en ce qu'**on utilise au moins un deuxième précurseur choisi dans le groupe des hydrures simples de formule E2ₙHₘ, E2 étant un élément de la colonne 15, n et m étant des nombres entiers non nuls.

12. Procédé selon l'une des revendications 1 à 11, caractérisé en qu'on ajoute au moins un ligand à ladite solution liquide.

13. Procédé selon la revendication 12, **caractérisé en ce qu'**on utilise au moins un ligand choisi dans le groupe formé des amines, des oxydes d'azotes, des aminoalcools, des nitriles (en particulier cyano), des amino-acides, des imines (bases de Schiff), des composés diazo, des carbamates, des ammoniums, des cyanates, des isocyanates, des siloxanes, des silanes, des silazanes, des urées, des carbonyles, des hydroxyles, des époxydes, des cyclodextrines, glycosides, des thiols, des aminothiols, des thiocyanates, des isothiocyanates, des xanthates (R-OC(S)SR'), des thiourées, des sulfites, des thionyles, des thiosulfates, des sulfates, des phosphines, des oxydes de phosphine, des sulfures de phosphines, des phosphonates, des acides phosphoniques, des phosphinates, des acides phosphiniques, des phosphates, des carboxylates, des acides carboxyliques, des carbènes, des alcynes, des alcènes, des arènes, et des acides de Lewis.

14. Procédé selon l'une des revendications 12 ou 13, **caractérisé en ce qu'**on utilise au moins un ligand choisi dans le groupe comprenant l'hexadécylamine, la dodécylamine, l'octylamine, l'oléylamine, l'éthylènediamine, pyridine, l'octanethiol, le dodécanethiol, l'hexadécanethiol, la trioctylphosphine, l'oxyde de trioctylphosphine, l'acide octanoïque, l'acide myristique, l'acide stéarique, l'acide oléique, l'acide laurique. l'acide hexylphosphonique, l'acide tetradécylphosphonique, le poly(éthylèneglycol) bis(3-propylamine) de formule H₂NC₃H₆[-OCH₂CH₂]ₙ-OC₃H₆NH₂ et ayant une masse molaire de l'ordre de 1500 g.mol⁻¹, le poly(éthylèneglycol) bis(2-éthylamine) de formule H₂NC₂H₄[-OCH₂CH₂]ₙ-OC₂H₄NH₂ et ayant une masse molaire de l'ordre de 3000 g.mol⁻¹ à 10 000 g.mol⁻¹, le α-(2-éthylamine)-méthoxy(éthylèneglycol) de formule H₃C[-OCH₂CH₂]ₙ-OC₂H₄NH₂ et ayant une masse molaire de l'ordre de 750 g.mol⁻¹, le poly(éthylèneglycol)dioïque de formule HOOC-CH₂[-OCH₂CH₂]ₙ-O-CH₂-COOH et ayant une masse molaire de l'ordre de 600 g.mol⁻¹, le méthyléther-poly(éthylèneglycol)oïque de formule H₃C[-OCH₂CH₂]ₙ-O-CH₂-COOH et ayant une masse molaire de l'ordre de 3000 g.mol⁻¹.

15. Procédé selon l'une des revendications 1 à 14, **caractérisé en ce qu'**on utilise un milieu solvant comprenant un solvant organique choisi parmi le THF,le DMF, le DMSO, le diéthyléther, le méthylterbutyl éther, le diisopropyl éther, le toluène, l'anisole, l'acétone, le benzène, le trichloroéthylène, l'acétate d'éthyle, l'heptane, l'hexane, le pentane, le cyclohéxane, l'acétonitrile, le chloroforme, le dichlorométhane, le dioxane, le xylène.

## Patentansprüche

1. Verfahren zur Herstellung einer Zusammensetzung von gemischten kristallinen Partikeln, umfassend mindestens ein Element der Spalte 13 und mindestens ein Element der Spalte 15 des Periodensystems der chemischen Elemente, wobei
- mindestens ein Vorläufer gewählt wird, der mindestens Element E1 der Spalte 13 umfasst,
- mindestens ein Vorläufer gewählt wird, der mindestens Element E2 der Spalte 15 umfasst,
- eine wässrige Lösung durch Solubilisierung in einem nicht wässrigen Lösemittelmedium von mindestens einem ersten Vorläufer, ausgewählt aus den Koordinationskomplexen, die mindestens ein Element E1 der Spalte 13 umfassen, in Anwesenheit von mindestens einer nicht reduzierenden Verbindung, genannt Ligand, gegenüber Vorläufern und ausgewählt aus der Gruppe der Verbindungen, umfassend die stickstoffhaltigen, kohlenstoffhaltigen, silylierten, schwefelhaltigen, phosphorhaltigen, sauerstoffhaltigen, borhaltigen Gruppen und ausgewählt, um die Bildung von gemischten monokristallinen Nanopartikeln zu begünstigen, durchgeführt wird,
- die flüssige Lösung mit mindestens einem zweiten Vorläufer, ausgewählt aus den Hydriden von mindestens einem Element E2 Spalte Säule 15, in Kontakt gebracht wird, und die flüssige Lösung Reaktionsbedingungen ausgesetzt wird, die geeignet sind, um das In-Kontakt-Bringen der Vorläufer zu ermöglichen und eine Reaktion zur Herstellung von gemischten kristallinen Partikeln anzutreiben,
**dadurch gekennzeichnet, dass** die Reaktion bei einer Temperatur von weniger als 100 ºC durchgeführt wird.

2. Verfahren nach Anspruch 1, **dadurch gekennzeichnet, dass** die Reaktion zur Bildung von Nanopartikeln bei Abwesenheit des Mittels durchgeführt wird, das eine Funktion als Reduktionsmittel für die Reaktion zur Bildung der Nanopartikel hat.

3. Verfahren nach einem der Ansprüche 1 oder 2, **dadurch gekennzeichnet, dass** die Reaktion bei einer Temperatur von weniger oder gleich 50 °C durchgeführt wird.

4. Verfahren nach einem der Ansprüche 1 bis 3, **dadurch gekennzeichnet, dass** die Reaktion bei Umgebungsdruck und -temperatur, ohne thermische Behandlung, durchgeführt wird.

5. Verfahren nach einem der Ansprüche 1 bis 4, **dadurch gekennzeichnet, dass** mindestens ein erster Vorläufer verwendet wird, ausgewählt aus der Gruppe der Koordinationskomplexe, die mindestens ein Element E1 der Spalte 13 umfassen, und mindestens eine Verbindung E1-A1, wobei A1 ein Element ist, ausgewählt aus Kohlenstoff, Stickstoff, Sauerstoff, Wasserstoff, Phosphor, Silizium, Schwefel und Selen.

6. Verfahren nach Anspruch 5, **dadurch gekennzeichnet, dass** mindestens ein erster Vorläufer verwendet wird, ausgewählt aus der Gruppe der Koordinationskomplexe, die mindestens ein Element E1 der Spalte 13 umfassen, und mindestens eine Gruppe, ausgewählt aus der Gruppe, bestehend aus den Amiden; den Amidinaten, den kohlenstoffhaltigen Gruppen; den Silylen; den sauerstoffhaltigen Gruppen; den Hydriden; den phosphorhaltigen Gruppen; den schwefelhaltigen Gruppen; den selenhaltigen Gruppen; sowie den Amin-, Phosphin-, sauerstoffhaltigen, schwefelhaltigen und selenhaltigen Addukten der Koordinationskomplexe, umfassend mindestens ein Element E1 der Spalte 13.

7. Verfahren nach einem der Ansprüche 1 bis 6, **dadurch gekennzeichnet, dass** mindesten ein zweiter Vorläufer im gasförmigen Zustand verwendet wird.

8. Verfahren nach Anspruch 7, **dadurch gekennzeichnet, dass** mindestens ein zweiter gasförmiger Vorläufer in der flüssigen Lösung sprudeln gelassen wird.

9. Verfahren nach einem der Ansprüche 7 oder 8, **dadurch gekennzeichnet, dass** die flüssige Lösung unter eine gasförmige Atmosphäre gegeben wird, die mindestens einen zweiten gasförmigen Vorläufer enthält.

10. Verfahren nach einem der Ansprüche 1 bis 9, **dadurch gekennzeichnet, dass** mindestens ein zweiter Vorläufer verwendet wird, ausgewählt aus der Gruppe der Hydride, umfassend mindestens ein Element E2 der Spalte 15, mindestens eine Verbindung E2-H, und mindestens eine Verbindung E2-A2, wobei A2 ein Element ist, ausgewählt aus Kohlenstoff, Stickstoff, Sauerstoff, Wasserstoff, Phosphor und Silizium.

11. Verfahren nach einem der Ansprüche 1 bis 10, **dadurch gekennzeichnet, dass** mindestens ein zweiter Vorläufer verwendet wird, ausgewählt aus der Gruppe von einfachen Hydriden der Formel E2ₙHₘ, wobei E2 ein Element der Spalte 15 ist, wobei n und m ganze Zahlen ohne Null sind.

12. Verfahren nach einem der Ansprüche 1 bis 11, **dadurch gekennzeichnet, dass** mindestens ein Ligand zur flüssigen Lösung hinzugegeben wird.

13. Verfahren nach Anspruch 12, **dadurch gekennzeichnet, dass** mindestens ein Ligand verwendet wird, ausgewählt aus der Gruppe, bestehend aus Aminen, Stickstoffoxiden, Aminoalkoholen, Nitrilen (insbesondere Cyano), Aminosäuren, Iminen (Schiff'sche Basen), Diazoverbindungen, Carbamaten, Ammonium, Cyanaten, Isocyanaten, Siloxanen, Silanen, Silizanen, Harnstoffen, Carbonylen, Hydroxylen, Epoxiden, Cyclodextrinen, Glycosiden, Thiolen, Aminothiolen, Thiocyanaten, Isothiocyanaten, Xanthaten (R-OC(S)SR'), Thioharnstoffen, Sulfiten, Thionylen, Thiosulfaten, Sulfaten, Phosphinen, Phosphinoxiden, Phosphinsulfiden, Phosphonaten, Phosphonsäuren, Phosphinaten, Phosphinsäuren, Phosphaten, Carboxylaten, Carbonsäuren, Carbenen, Alkinen, Alkenen, Sanden und Lewis-Säuren.

14. Verfahren nach einem der Ansprüche 12 oder 13, **dadurch gekennzeichnet, dass** mindestens ein Ligand verwendet wird, ausgewählt aus Hexadecylamin, Dodecylamin, Octylamin, Oleylamin, Ethylendiamin, Pyridin, Octanthiol, Dodecanthiol, Hexadecanthiol, Trioctylphosphin, Trioctylphosphinoxid, Octansäure, Myristinsäure, Stearinsäure, Oleinsäure, Laurinsäure, Hexylphosphonsäure, Tetradecylphosphonsäure, Poly(ethylenglycol) bis(3-propylamin) der Formel H₂NC₃H₆[-OCH₂CH₂]ₙ-OC₃H₆NH₂ und mit einer Molmasse im Bereich von 1500 g.mol⁻¹, Poly(ethylenglycol) bis(2-ethylamin) der Formel H₂NC₂H₄[-OCH₂CH₂]ₙ-OC₂H₄NH₂ und mit einer Molmasse im Bereich von 3000 g.mol⁻¹ bis 10000 g.mol⁻¹, α-(2-ethylamin)-methoxy(ethylenglycol) der Formel H₃C[-OCH₂CH₂]ₙ-OC₂H₄NH₂ und mit einer Molmasse im Bereich von 750 g.mol⁻¹, Di(polyethylenglycol) der Formel HOOC-CH₂[-OCH₂CH₂]ₙ-O-CH₂-COOH und mit einer Molmasse im Bereich von 600 g.mol⁻¹, Methyletherpoly (ethylenglycol) säure der Formel H₃C[-OCH₂CH₂]ₙ-O-CH₂-COOH und mit einer Molmasse im Bereich von 3000 g.mol⁻¹,

15. Verfahren nach einem der Ansprüche 1 bis 14, **dadurch gekennzeichnet, dass** ein Lösemittelmedium mit einem organischen Lösemittel verwendet wird, ausgewählt aus THF, DMF, DMSO, Diethylether, Methylterbutylether, Diisopropylether, Toluen, Anisol, Aceton, Benzen, Trichlorethylen, Ethylacetat, Heptan, Hexan, Pentan, Cyclohexan, Acetonitril, Chrloroform, Dichlormethan, Dioxan, Xylen.

## Claims

1. Process for preparing a composition of mixed crystalline particles including at least one element from column 13 and at least one element from column 15 of the table of the periodic system of the chemical elements, in which :
- at least one precursor comprising at least one element E1 from column 13 is chosen,
- at least one precursor comprising at least one element E2 from column 15 is chosen,
- a liquid solution is prepared by solubilising in a non-aqueous solvent medium at least one first precursor chosen from the coordination complexes comprising at least one element E1 from column 13, in the presence of at least one compound, called a ligand, that does not have a reducing action with respect to the precursors and is chosen to facilitate the formation of mixed monocrystalline nanoparticles,
- said liquid solution is brought into contact with at least one second precursor chosen from the hydrides of at least one element E2 from column 15, and said liquid solution is subjected to reaction conditions capable of permitting contacting of the precursors and bringing about a reaction that produces mixed crystalline particles,
**characterised in that** the reaction is carried out at a temperature below 100°C.

2. Process according to claim 1, **characterised in that** the nanoparticle-forming reaction is carried out in the absence of an agent acting as a reducing agent for the nanoparticle-forming reaction.

3. Process according to one of claims 1 or 2, **characterised in that** the reaction is carried out at a temperature below or equal to 50°C.

4. Process according to one of claims 1 to 3, **characterised in that** the reaction is carried out at ambient pressure and temperature, without heat treatment.

5. Process according to one of claims 1 to 4, **characterised in that** there is used at least one first precursor chosen from the group of the coordination complexes comprising at least one element E1 from column 13 and at least one E1-A1 bond, where A1 is an element chosen from carbon, nitrogen, oxygen, hydrogen, phosphorus, silicon, sulfur and selenium.

6. Process according to claim 5, **characterised in that** there is used at least one first precursor chosen from the group of the coordination complexes comprising at least one element E1 from column 13 and at least one group chosen from the group comprising the amides; amidinates; carbon-containing groups; silyls; oxygen-containing groups; hydrides; phosphorus-containing groups; sulfur-containing groups; selenium-containing groups; as well as the amine, phosphine, oxygen-containing, sulfur-containing and selenium-containing adducts of the coordination complexes comprising at least one element E1 from column 13.

7. Process according to one of claims 1 to 6, **characterised in that** at least one second precursor in the gaseous state is used.

8. Process according to claim 7, **characterised in that** at least one gaseous second precursor is bubbled into said liquid solution.

9. Process according to one of claims 7 or 8, **characterised in that** said liquid solution is placed under a gaseous atmosphere containing at least one gaseous second precursor.

10. Process according to one of claims 1 to 9, **characterised in that** there is used at least one second precursor chosen from the group of the hydrides comprising at least one element E2 from column 15, at least one E2-H bond and at least one E2-A2 bond, where A2 is an element chosen from carbon, nitrogen, oxygen, hydrogen, phosphorus and silicon.

11. Process according to one of claims 1 to 10, **characterised in that** there is used at least one second precursor chosen from the group of the simple hydrides of formula E2ₙHₘ, E2 being an element from column 15, n and m being non-zero integers.

12. Process according to one of claims 1 to 11, **characterised in that** at least one ligand is added to said liquid solution.

13. Process according to claim 12, **characterised in that** there is used at least one ligand chosen from the group formed of the amines, nitrogen oxides, amino alcohols, nitriles (in particular cyano), amino acids, imines (Schiff bases), diazo compounds, carbamates, ammoniums, cyanates, isocyanates, siloxanes, silanes, silazanes, ureas, carbonyls, hydroxyls, epoxides, cyclodextrins, glycosides, thiols, aminothiols, thiocyanates, isothiocyanates, xanthates (R-OC(S)SR'), thioureas, sulfites, thionyls, thiosulfates, sulfates, phosphines, phosphine oxides, phosphine sulfides, phosphonates, phosphonic acids, phosphinates, phosphinic acids, phosphates, carboxylates, carboxylic acids, carbenes, alkynes, alkenes, arenes, and Lewis acids.

14. Process according to either claim 12 or 13, **characterised in that** there is used at least one ligand chosen from the group comprising hexadecylamine, dodecylamine, octylamine, oleylamine, ethylenediamine, pyridine, octanethiol, dodecanethiol, hexadecanethiol, trioctylphosphine, trioctylphosphine oxide, octanoic acid, myristic acid, stearic acid, oleic acid, lauric acid, hexylphosphonic acid, tetradecylphosphonic acid, poly(ethylene glycol) bis(3-propylamine) of formula H₂NC₃H₆[-OCH₂CH₂]ₙ-OC₃H₆NH₂ and having a molar mass of the order of 1500 g.mol⁻¹, poly(ethylene glycol) bis(2-ethylamine) of formula H₂NC₂H₄[-OCH₂CH₂]ₙ-OC₂H₄NH₂ and having a molar mass of the order of 3000 g.mol⁻¹ to 10,000 g.mol⁻¹, α-(2-ethylamine)-methoxy(ethylene glycol) of formula H₃C[-OCH₂CH₂]ₙ-OC₂H₄NH₂ and having a molar mass of the order of 750 g.mol⁻¹, poly(ethylene glycol)dioic of formula HOOC-CH₂[-OCH₂CH₂]ₙ-O-CH₂-COOH and having a molar mass of the order of 600 g.mol⁻¹, methyl ether poly(ethylene glycol)oic of formula H₃C[-OCH₂CH₂]ₙ-O-CH₂-COOH and having a molar mass of the order of 3000 g.mol⁻¹.

15. Process according to one of claims 1 to 14, **characterised in that** there is used a solvent medium comprising an organic solvent chosen from THF, DMF, DMSO, diethyl ether, methyl tert-butyl ether, diisopropyl ether, toluene, anisole, acetone, benzene, trichloroethylene, ethyl acetate, heptane, hexane, pentane, cyclohexane, acetonitrile, chloroform, dichloromethane, dioxane, xylene.
